(19) **Europäisches Patentamt / European Patent Office / Office européen des brevets**

(11) **EP 2 453 203 A1**

(12) **EUROPEAN PATENT APPLICATION**

(43) Date of publication:
**16.05.2012 Bulletin 2012/20**

(21) Application number: **10251916.2**

(22) Date of filing: **10.11.2010**

(51) Int Cl.:
*G01C 9/06* *(2006.01)* *G01C 21/16* *(2006.01)*
*B60T 8/17* *(2006.01)* *B60T 8/32* *(2006.01)*
*G01C 21/10* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Pilot Ltd**
**Lewisham**
**London**
**SE13 5AN (GB)**

(72) Inventors:
• **Lancaster, Michael**
  **London (GB)**
• **Sleddon, Stephen**
  **London SE13 5AN (GB)**
• **Colby, Mark**
  **London SE13 5AN (GB)**

(74) Representative: **Brinck, David John Borchardt et al**
**R.G.C. Jenkins & Co**
**26 Caxton Street**
**London SW1H 0RJ (GB)**

(54) **Orientation sensor**

(57) There is discussed an orientation sensor having a first mounting means for mounting the orientation sensor to an object, a second mounting means mounting a member to the first mounting means; and two or more accelerometers provided on said member. The second mounting means is an anti-vibration mount operable to attenuate vibrational movement travelling from the object to the member. In this way, the two accelerometers provide readings which can be used to determine the orientation of the object. One application for the orientation sensor is to determine the orientation of a motorcycle as it corners.

FIG. 4

EP 2 453 203 A1

**Description**

This invention is an orientation sensor for detecting the orientation of an object relative to a vertical direction. The invention has particular, but not exclusive, application to the detection of the angle of tilt of a two-wheeled vehicle, such as a motorcycle, relative to the vertical as the two-wheeled vehicle corners.

Sensors for detecting the angle of tilt of a cornering motorcycle are known in the context of high-performance motorcycles for racing. Typically, such sensors are an integral part of the motorcycle and utilise gyroscopes. The use of gyroscopes in an orientation sensor for mass-production motorcycles is undesirable due to high cost. In addition, gyroscopes require regular zero-point setting.

One alternative to using gyroscopes is to use two laser ride height detectors provided on respective sides of the motorcycle. However, the expense of such laser ride height detectors again make them undesirable for mass-production motorcycles.

Accelerometers are a cheaper alternative to gyroscopic sensors, and attempts have been made to make an orientation sensor for a motorcycle using two or more accelerometers. Such attempts have failed to produce an orientation sensor which provides a reliable measurement of the angle of tilt of a motorcycle.

An object of the present invention is to provide an orientation sensor for measuring the orientation of an object, for example a cornering motorcycle.

Aspects of the invention are set out in the accompanying claims.

In an embodiment of the invention, an orientation sensor has two or more accelerometers provided on a circuit board which is mounted on an anti-vibration mount which, in effect, acts as a mechanical filter to isolate at least partially the accelerometers from vibrational movement of the object to which it is attached. In the context of an orientation sensor or detecting the angle of tilt of a motorcycle, such vibrational movement can be caused by the engine and by the road surface. It is believed that previous attempts to use accelerometers in a motorcycle orientation sensor have employed electrical filtering of the readings from the accelerometers to filter out components at the vibrational frequencies of the objects. The present inventors have realised that such attempts have been unsuccessful in high vibration environments, such as on a motorcycle, because the vibrations are sufficient to drive the accelerometer outside of its working range, making electrical filtering ineffective. The solution of using an anti-vibration mount to attenuate vibrational movement mechanically prevents the accelerometers from being driven out of their working range, and allows for reliable detection of the orientation relative to the vertical.

By using two accelerometers oriented in orthogonal directions, the angle of tilt relative to the vertical within a single plane can be determined. By using three accelerometers oriented in mutually orthogonal directions, the angle of tilt relative to the vertical within any plane can be determined.

In an embodiment, the orientation sensor is mounted to a motorcycle. In such an embodiment, the orientation sensor measures the angle of tilt between a straight line starts at the point of contact with the road and passes through the combined centre of gravity of the motorcycle and rider (this angle of tilt is hereafter referred to as the system angle of tilt). During cornering, both the point of contact with the road and the combined centre of gravity of the motorcycle and rider move. In particular, the point of contact with the road will tend to move up the side of the tyre wall facing into the corner, while the rider will usually tend to lean into the corner more than the motorcycle. In an embodiment, the orientation sensor determines, in addition to the system angle of tilt, the angle of tilt of the motorcycle frame relative to the vertical (hereafter called the frame angle of tilt) and the offset between the system angle of tilt and the frame angle of tilt. This offset can provide information on the expertise of the rider, in that it is a measure of the amount the rider moves relative to the motorcycle.

The measured orientation angle can either be displayed or can be used as a control parameter.

Various embodiments of the invention will now be described with reference to the attached figures in which:

Figure 1 schematically shows a motorcycle, having an orientation sensor according to a first embodiment of the invention mounted thereon, which is leaning while cornering;

Figure 2 schematically shows the forces measured by two orthogonal accelerometers provided in the orientation sensor illustrated in Figure 1;

Figure 3 is an isometric view of the orientation sensor illustrated in Figure 1;

Figure 4 is an exploded view of the orientation sensor illustrated in Figure 1;

Figures 5A and 5B respectively show plan and isometric views of an anti-vibration mounting forming part of the orientation sensor illustrated in Figure 1;

Figure 6 is a schematic block diagram schematically showing the main electrical components of the orientation sensor illustrated in Figure 1;

Figure 7 is a block diagram schematically showing the processing of accelerometer data by the orientation sensor illustrated in Figure 1;

Figure 8 shows a first alternative anti-vibration mounting to the anti-vibration mounting illustrated in Figures 5A and 5B;

Figure 9 shows a second alternative anti-vibration mounting to the anti-vibration mounting illustrated in Figures 5A and 5B; and

Figure 10 shows a third alternative anti-vibration mounting to the anti-vibration mounting illustrated in Figures 5A and 5B.

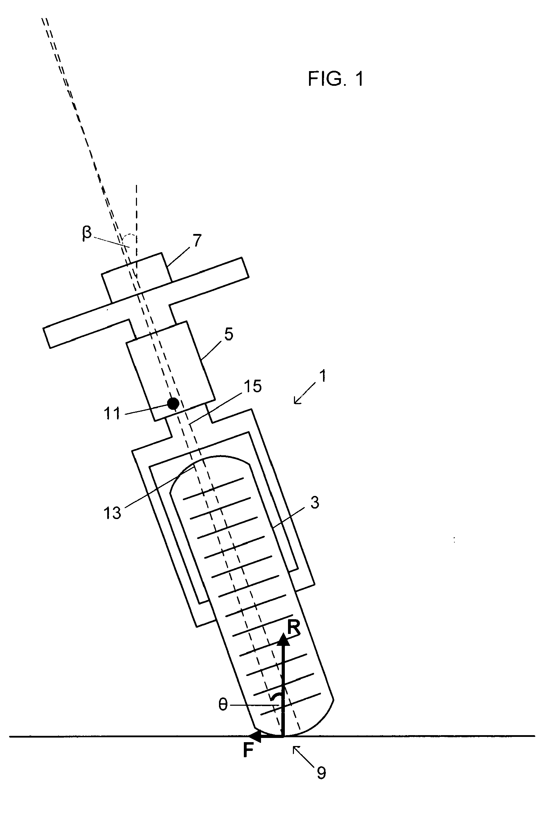

Figure 1 shows a motorcycle 1 having a wheel 3 mounted to a frame 5. An orientation sensor 7 according to the invention is mounted on the frame 5. The rider of the motorcycle 1 is not shown in Figure 1 for ease of illustration. As shown, the motorcycle 1 leans while going around a corner. This leaning is necessary to prevent the forces applied to the motorcycle 1 at the point of contact 9 with the ground from toppling the motorcycle 1 over. The point of contact 9 with the ground occurs at different positions of the wheel 3 for different angles of lean. In particular, as shown in Figure 1, the point of contact 9 will tend to move up the side wall of the wheel 3 facing into the turn as the lean angle increases.

The forces applied to the motorcycle 1 at the point of contact 9 consist of a reaction force R perpendicular to the surface of the ground and a cornering force F which is directed into the centre of curvature of the turn. The magnitude of the cornering force F depends on the speed of the motorcycle 1 and the radius of curvature of the turn. In order for the motorcycle 1 to remain balanced, the resultant force of the reaction force R and the cornering force F must pass through the centre of mass 11 of the motorcycle 1 and rider. The centre of mass 11 tends to move relative to the frame 5 of the motorcycle 1 during cornering because the rider shifts position relative to the frame 5. In particular, a rider tends to lean more into the turn than the motorcycle 1.

In Figure 1, the direction 13 of the resultant force from the reaction force R and the cornering force F is at an angle θ to the vertical. It can also be seen from Figure 1 that the upright axis 15 of the frame (hereafter called the frame axis) has an angular offset from the resultant force direction 13.

In this embodiment, the orientation sensor 7 has three accelerometers (not shown) which are arranged in mutually perpendicular directions. Two of the accelerometers, hereafter called the X-accelerometer and the Y-accelerometer, are mounted to detect acceleration at an angle of 45° to the frame axis on respective sides of the motorcycle 1. The third accelerometer, hereafter called the Z-accelerometer, is mounted to detect acceleration along the horizontal axis of the motorcycle 1.

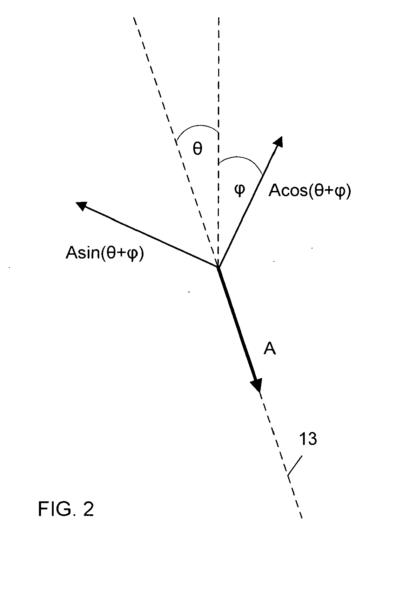

Figure 2 schematically shows the accelerations detected by the X-accelerometer and the Y-accelerometer when the motorcycle 1 is cornering and the system angle of tilt to the vertical is an angle θ. If the acceleration along the resultant force direction 13 is A, then the acceleration detected by the X-accelerometer is $A\sin(\theta+\varphi)$ and the acceleration detected by the Y-accelerometer is $A\cos(\theta+\varphi)$, where φ is the angle between the direction of the Y-accelerometer and the vertical. Accordingly:

$$A = \sqrt{X^2 + Y^2}$$

where: X is the reading of the X-accelerometer

Y is the reading of the Y-accelerometer

The component of the acceleration in the vertical direction is due to gravity, and accordingly:

$$A\cos\theta = g$$

It therefore follows that the system angle of tilt θ can be calculated using the formula:

$$\theta = \cos^{-1}\left( g \middle/ \sqrt{X^2 + Y^2} \right)$$

By comparing the readings of the X-accelerometer and the Y-accelerometer, it is also possible to determine any offset between the system angle of tilt θ and the angle between the frame axis 15 of the frame 5 (the frame angle of tilt). In particular, with the X-accelerometer and the Y-accelerometer each mounted at 45° to the frame axis 15 so that their readings are identical when the frame axis 15 is vertical, the angle of the resultant force detected at the X-accelerometer and the Y-accelerometer, given by $\tan^{-1}(X/Y)$, will only be 45° when the frame axis 15 is vertical. Any deviation from 45° in the angle of the resultant force corresponds to the angular offset δ between the system angle of tilt and the frame angle of tilt. Accordingly, the frame angle of tilt can be determined by adding the offset δ to the system angle of tilt θ.

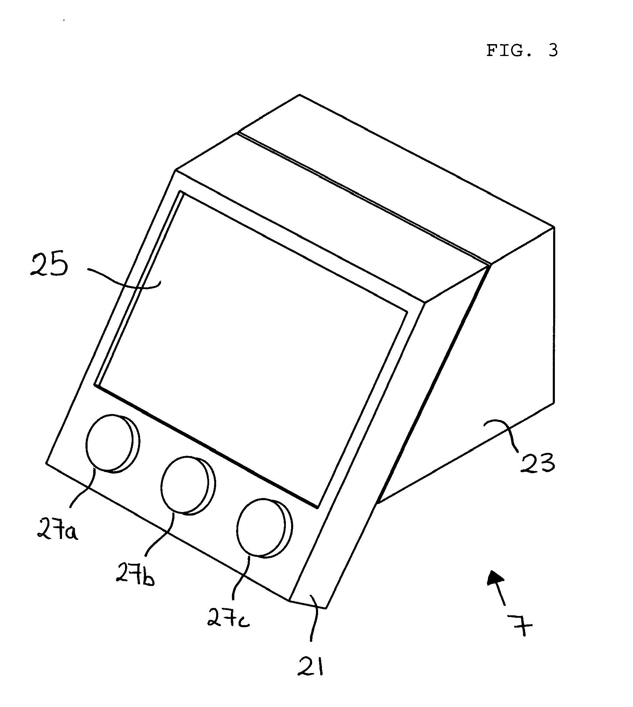

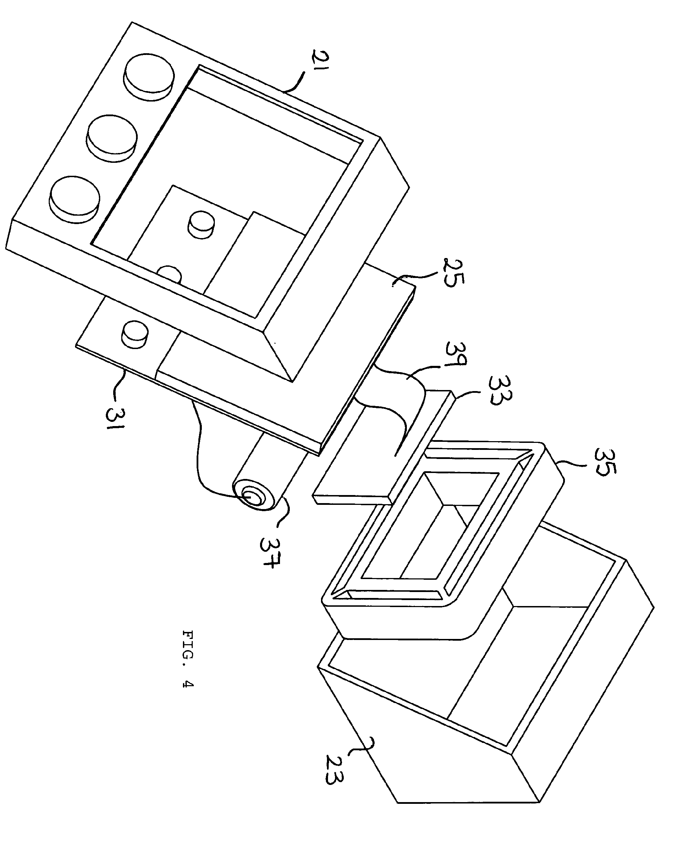

As shown in Figure 3, the orientation sensor 7 has a housing formed by a front housing member 21 and a rear housing member 23. A display 25 and three push buttons 27a,27b,27c are mounted in the front housing member 21. As shown in Figure 4, the display 25 is mounted on a first circuit board 31. A second circuit board 33 is mounted in an anti-vibration mount 35, which is in turn mounted in the rear housing member 23. The housing also houses a battery 37 for supplying power to the first circuit board 31. A cable 39 connects the first circuit board 31 to the second circuit board 33 to allow data to be communicated between the first and second circuit boards 31,33 and to allow power to be supplied to the second circuit board 33.

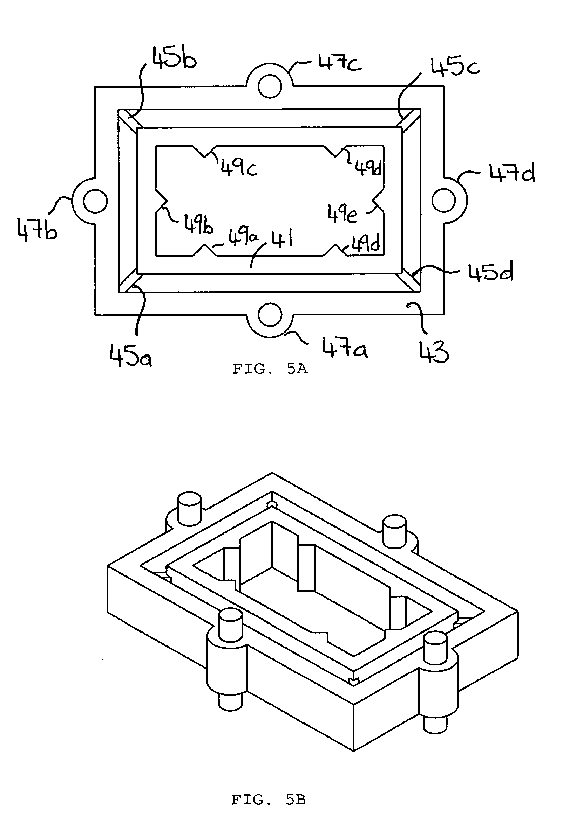

Figures 5A and 5B show in more detail the anti-vibration mount 35, which in this embodiment is a one-piece moulded component made of a material having a high damping quality. In this embodiment, the anti-vibration mount 35 is made from a natural rubber compound, although other materials such as a synthetic rubber compound could alternatively be used. In this embodiment, the anti-vibration mount 35 is formed by an inner rectangular perimeter part 41, which surrounds the second circuit board 33, and an outer rectangular perimeter part 43 which surrounds the inner rectangular perimeter part 41.

The inner rectangular perimeter part 41 and the outer perimeter part 43 are separated by a gap except for four bridging elements 45a-45d, respectively provided at the four corners of the inner and outer rectangular perimeter parts 41,43, connecting the inner rectangular perimeter part 41 to the outer rectangular perimeter part 43. A bush mounting 47a-47d is provided in the middle of the each outside edge of the outer rectangular perimeter part 43 for connecting the outer rectangular perimeter part 43 to the rear housing member 23. Six strakes 49a-49d are provided around the inner surface of the inner rectangular perimeter part 41 for supporting the second circuit board 23.

The outer rectangular perimeter part 43 is more substantial than the inner rectangular perimeter part 41, and provides the majority of the damping. In particular, any vibration of the housing can only pass to the anti-vibration mount 35 via one of the bushes 47, and then must travel around the outer rectangular perimeter part 43 to one of the bridging elements 45, all the while being attenuated by the outer rectangular perimeter part 43. The bridging elements 45 have a reduced cross-sectional area compared to the outer rectangular perimeter part 43, resulting in a further damping action, and then to reach the second circuit board 23 the vibration must travel along the inner rectangular perimeter part 41 to one of the strakes 47, leading to still more attenuation.

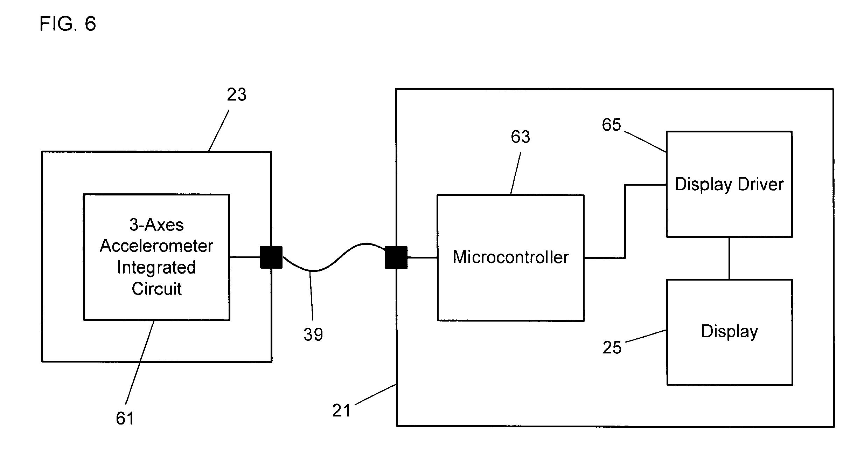

Figure 6 schematically shows the main electrical components of the orientation sensor 7. As shown, an integrated circuit 61 (in this embodiment, the STMicroelectronics LIS3DH MEMS digital output motion sensor) incorporating the three orthogonally-mounted accelerometers is mounted on the second circuit board 23. The X, Y and Z readings are supplied, via the cable 39, to a microcontroller 63 (in this embodiment a PIC24FJ32GB002 Microcontroller available from Microchip Technology Inc.) which is mounted on the first circuit board 21. The microcontroller 63 is connected to a display driver 65 which supplies drive signals to the display 25. Both the display driver 65 and the display 25 are also mounted on the first circuit board 21.

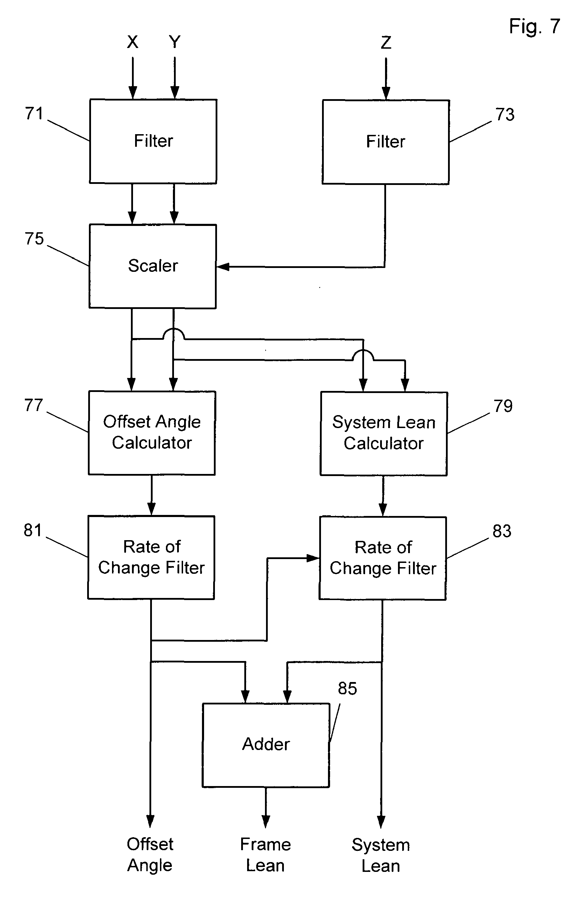

Figure 7 schematically shows the processing operations performed by the microcontroller 63.

Firstly, the X and Y readings pass though a low pass filtering stage 71 to remove high frequency noise, and similarly the Z reading passes through a low pass filtering stage 73 to remove high frequency noise. The X and Y readings are then input, along with the Z reading, into a scaling stage 75 which scales the X and Y readings in dependence on the Z reading. In this way, any misalignment associated with an angular offset between the plane including the measurement directions for the X-accelerometer and the Y-accelerometer and a vertical plane can be corrected for as this will show up in the Z reading. In this embodiment, the scaling factor is determined during an initial set-up procedure while the motorcycle is stationary.

The scaled X and Y readings are then input to an offset angle calculating stage 77 and a system lean calculating stage 79. The offset angle calculating stage 77 inputs the X and Y readings into a look-up table which in response provides the value $\tan^{-1}(X/Y)$, i.e. the offset angle $\delta$. Similarly, the system lean calculating stage 79 inputs the X and Y values into a look-up table which in response provides the value $\cos^{-1}(1/\sqrt{(X^2+Y^2)})$, i.e. the system angle of tilt $\theta$.

The offset angle $\delta$ output by the offset angle calculating stage 77 passes through a rate of change filtering stage 81. The system angle of tilt $\theta$ output by the system lean calculating stage 79 similarly passes though a rate of change filtering stage 83. The filtered offset angle $\delta$ is input to the rate of change filtering stage 83 such that the filtering performed by the rate of change filtering stage 83 varies in dependence on the offset angle $\delta$; the larger the offset angle $\delta$, the less rate of change filtering is applied.

The filtered offset angle $\delta$ and the filter system lean $\theta$ are input to an adding stage 85, which adds the filtered offset angle $\delta$ and the filter system lean $\theta$ to calculate the frame lean. In accordance with a user instruction received via one of the push buttons 27, the microcontroller 63 outputs either the filtered offset angle $\delta$, the system angle of tilt $\theta$ or the frame angle of tilt to the display controller 65 for display on the display 25. In one mode of operation, the microcontroller 63 continually samples the displayed value and holds the peak value reached until a predetermined period of time, for example fifteen seconds, after the motorcycle has recovered an upright position. In this way, rather than looking at the display 25 in the middle of a turn, the rider of the motorcycle 1 can review the peak value at a safer moment after exiting the turn.

MODIFICATIONS AND FURTHER EMBODIMENTS

In the first embodiment, a particular anti-vibration mount design is used. Alternative designs of anti-vibration mount could be used. The important properties of the anti-vibration mount are that frequencies above 10 Hz are sufficiently attenuated and that there are no resonant frequencies matching vibrational frequencies which are likely to be encountered in use.

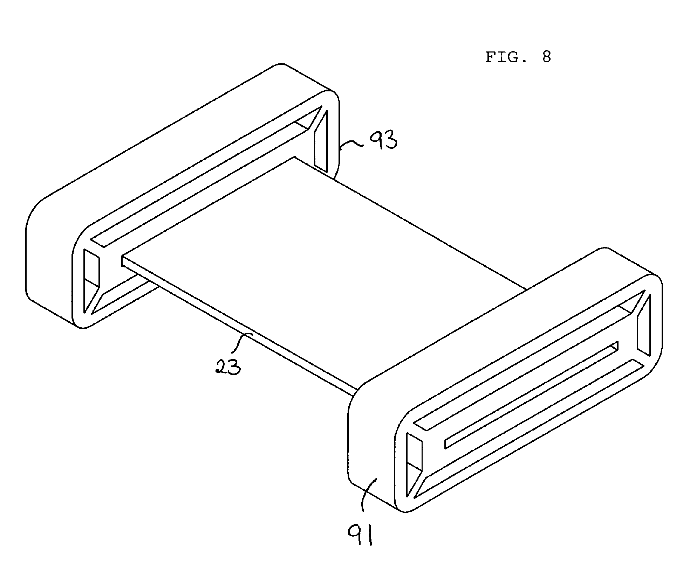

Figure 8 shows an alternative anti-vibration mounting arrangement in which an ant-vibration mounting member 91,93 is provided at each end of the second circuit board 23 The construction of each anti-vibration mounting member 91,93 is similar to that of the anti-vibration mount of the first embodiment, but rather than surrounding the whole of the second circuit board 25, each anti-vibration mounting member only surrounds an end portion of the second circuit board 25.

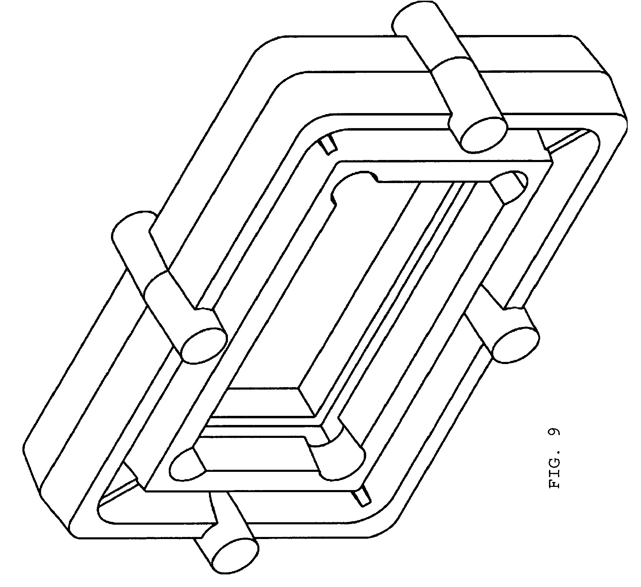

Figure 9 shows a variation of the anti-vibration mount of the first embodiment in which the six strakes around the interior of the inner rectangular perimeter part are replaced by a groove 101 in which the second circuit board is mounted. Such an arrangement provides for more secure attachment of the second circuit board to the anti-vibration mount. This can be particularly useful if the housing is sealed so that access to the inside of the housing to correct attachment is difficult.

The anti-vibration mounts of Figures 5A and 5B, 8 and 9 have two generally rectangular structures which are provided one inside the other. it will be appreciated that the inner structure and the outer structure need not be rectangular, and could for example be circular.

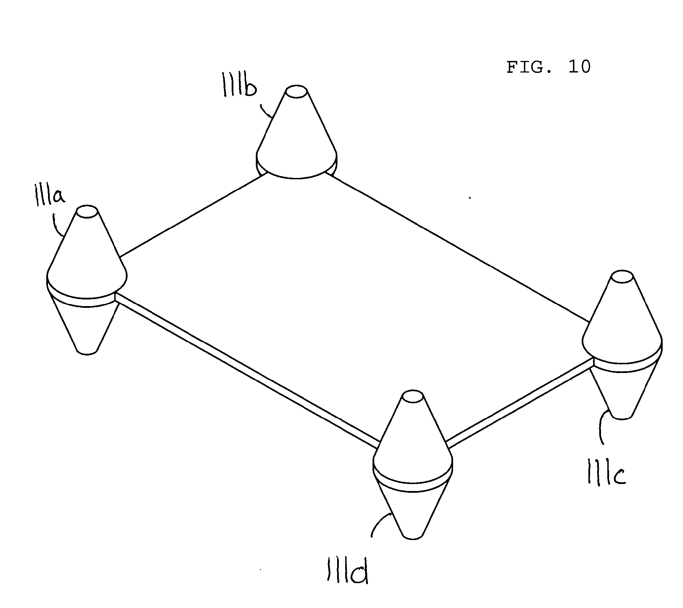

Figure 10 shows another alternative anti-vibration mounting arrangement. In this arrangement, four double-sided rubber cones 111a-111d are used to isolate the second circuit board from vibrations.

In the illustrated embodiment, a display shows the calculated values for the system angle of tilt, the frame angle of tilt and the offset angle in accordance with a user instruction. The calculated data can also be stored for further analysis at a later date. In this regard, the orientation sensor may include means for communicating with an external computing device, for example via a wired link (such as a USB cable) or a wireless link (such as a Bluetooth connection).

As mentioned previously, the calculated offset can provide a measure of how well the rider of the motorcycle is cornering.

In the illustrated embodiment, the orientation sensor is provided as a standalone product which can be affixed to a motorcycle. In this way, an owner of a motorcycle can purchase the orientation sensor and attach the orientation sensor to the already owned motorcycle. The orientation sensor could, however, form an integral part of a motorcycle. If the orientation sensor forms an integral part of the motorcycle, then the output of the orientation sensor could be used as a control input for an engine management system. For example, the engine management system could automatically vary the throttle level to ensure that a threshold lean angle is not exceeded.

The system angle of tilt is dependent on two factors, the speed of the motorcycle and the radius of curvature of the corner. Accordingly, if one of the factors is known then the other factor can be calculated using the system angle of tilt. For example, the radius of curvature of the corner can be calculated based on the system angle of tilt and the speed of the motorcycle as measured for a speedometer. Alternatively, the speed of the motorcycle can be calculated from the system angle of tilt and the radius of curvature as calculated using position readings provided by a positioning system such as the Global Positioning System (GPS).

In one embodiment, the orientation sensor further includes a positioning system receiver operable to determine the position of the orientation sensor using signals from either a terrestrial navigation system (such as LORAN) or a satellite-based navigation system (such as GPS or the Galileo positioning system). Preferably, in such a system the data for the system angle of lean and the detected position are logged for a sequence of time instants for further evaluation.

Further, the orientation sensor may also include a camera for recording the images of the route followed by the motorcycle. In this way, at a later time the camera images may be reviewed in conjunction with the recorded orientation data.

While it is envisaged that the main market for the orientation sensor according to the present invention will be for normal use in mass production motorcycles, the orientation sensor could also be used in a "track day" environment in which riders ride a motorcycle (which may or may not be their own) around a track. It is noted that the information provided by the offset angle relating to the way in which the rider is cornering could be particularly well employed in such a controlled environment to assist improving the riding style of the rider.

Although the description has concentrated on the use of the orientation sensor with a motorcycle, the orientation sensor has many other potential uses: For example, the orientation sensor could be used to measure the lean of other two-wheeled vehicles in which the wheels are aligned one after the other in the direction of travel, for example an unpowered bicycle. The orientation sensor can also be used to measure the lean of a pair of skis or a snowboard.

**Claims**

1. An orientation sensor comprising:

   first mounting means for mounting the orientation sensor to an object;
   second mounting means mounting a member to the first mounting means; and
   two or more accelerometers provided on said member,
   wherein the second mounting means is an anti-vibration mount operable to attenuate vibrational movement travelling from the object to the member.

2. An orientation sensor according to claim 1, wherein the second mounting means comprises:

   an inner structure holding said member;
   an outer structure fixed relative to the first mounting means; and
   a plurality of bridging members connecting the inner structure to the outer structure.

3. An orientation sensor according to claim 2, wherein at least one of the inner structure and the outer structure comprises a vibration damping material.

4. An orientation sensor according to any preceding claim, wherein said member comprises a circuit board.

5. An orientation sensor according to any preceding claim, wherein said two or more accelerometers comprises:

> a first accelerometer arranged to detect acceleration in a first direction and to output a signal indicative of the detected acceleration in the first direction;
> a second accelerometer arranged to detect acceleration in a second direction and to output a signal indicative of the detected acceleration in the second direction; and
> processing means for processing the signals output by the first and second accelerometers to determine a measure of orientation.

6. An orientation sensor according to claim 5, wherein the first direction and the second direction are perpendicular to each other and pass through a common point, and wherein the processor is arranged to calculate the angle of tilt of a plane including the common point relative to a vertical plane.

7. An orientation sensor according to claim 6, wherein the angle between the first direction and a line normal to said plane is 45° and the angle between the second direction and a line normal to said plane is 45°.

8. An orientation sensor according to claim 6 or 7, wherein the plane is a first plane, and wherein the processor is arranged to calculate the offset between the first plane and a second plane passing through the centre of gravity of the object.

9. An orientation sensor according to any of claims 5 to 8, further comprising a third accelerometer to detect acceleration in a third direction which is perpendicular to said first and second directions.

10. An orientation sensor according to claim 9, wherein the processor scales the outputs of the first and second accelerometers in accordance with the output of the third accelerometer.

11. An orientation sensor according to any preceding claim, further comprising a display for displaying an orientation value calculated by the orientation sensor.

12. An orientation sensor according to any preceding claim, wherein the first mounting means is arranged to mount the orientation sensor to a motorcycle.

13. A motorcycle having an orientation sensor as claimed in any preceding claim mounted thereon.

14. A motorcycle according to claim 13, wherein the orientation sensor is arranged to calculate the orientation of the orientation sensor relative to the vertical.

15. A motorcycle according to claim 13 or 14, wherein the orientation sensor is arranged to calculate the angle of the motorcycle frame relative to the vertical.

FIG. 1

FIG. 2

FIG. 3

FIG. 4

FIG. 5A

FIG. 5B

**FIG. 6**

Fig. 7

FIG. 8

FIG. 9

FIG. 10

111a

111b

111c

111d

| | Europäisches Patentamt European Patent Office Office européen des brevets | **EUROPEAN SEARCH REPORT** | Application Number EP 10 25 1916 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/163282 A1 (KRIEG DIETMAR [DE] ET AL) 28 August 2003 (2003-08-28) * paragraphs [0009], [0 36], [0048] * * figures 4,8 * ----- | 1,4,5,9, 11 | INV. G01C9/06 G01C21/16 B60T8/17 B60T8/32 G01C21/10 |
| X | GB 2 271 422 A (GEC FERRANTI DEFENCE SYST [GB]; GEC MARCONI AVIONICS HOLDINGS [GB]) 13 April 1994 (1994-04-13) * page 3, paragraph 4-5 * * figure 1 * ----- | 1,4,5,9, 11 | |
| X | US 6 688 174 B1 (GALLON PIERRE [FR] ET AL) 10 February 2004 (2004-02-10) * paragraph [0008] * * figure 4 * ----- | 1-5,9,11 | |
| X | CN 101 532 840 A (UNIV ZHEJIANG) 16 September 2009 (2009-09-16) * abstract * ----- | 1-5,9,11 | |
| X | DE 100 03 832 A1 (SCHUBACH RUDOLF [DE]) 2 August 2001 (2001-08-02) | 1,4,5,9, 11-15 | TECHNICAL FIELDS SEARCHED (IPC) |
| A | * column 3, line 59 - line 60 * * figures 2,7 * ----- | 2,3,6-8, 10 | G01C B60T B62J |
| Y | US 5 445 443 A (HAUSER BERTHOLD [DE] ET AL) 29 August 1995 (1995-08-29) | 1-3,5-7, 9,11-15 | B81B F16F |
| A | * figures 2,3 * * column 1, line 3 - line 8 * ----- | 4,8,10 | G01D G01P |
| Y | US 2009/282915 A1 (OHTA TAMEHARU [JP] ET AL) 19 November 2009 (2009-11-19) * paragraphs [0003], [0006], [0063] * * figures 7A, 7B * ----- | 1-3,5-7, 9,11-15 | |

-/--

The present search report has been drawn up for all claims

| Place of search | Date of completion of the search | Examiner |
|---|---|---|
| The Hague | 1 April 2011 | Berbil Bautista, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 10 25 1916

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/194860 A1 (HOLZMANN MARTIN [DE] ET AL) 6 August 2009 (2009-08-06)<br>* paragraphs [0007], [0008], [0012] *<br>* figure 2 *<br>----- | 1-3,5-7, 9,11-15 | |
| A | DE 100 39 978 A1 (SCHUBACH RUDOLF [DE]) 17 May 2001 (2001-05-17)<br>* the whole document *<br>----- | 1-15 | |

TECHNICAL FIELDS
SEARCHED       (IPC)

The present search report has been drawn up for all claims

| Place of search | Date of completion of the search | Examiner |
|---|---|---|
| The Hague | 1 April 2011 | Berbil Bautista, L |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 10 25 1916

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2011

| Patent document cited in search report | | Publication date | Patent family member(s) | | Publication date |
|---|---|---|---|---|---|
| US 2003163282 | A1 | 28-08-2003 | NONE | | |
| GB 2271422 | A | 13-04-1994 | NONE | | |
| US 6688174 | B1 | 10-02-2004 | DE | 69923955 D1 | 07-04-2005 |
| | | | DE | 69923955 T2 | 23-02-2006 |
| | | | EP | 1058818 A1 | 13-12-2000 |
| | | | FR | 2787878 A1 | 30-06-2000 |
| | | | WO | 0039526 A1 | 06-07-2000 |
| CN 101532840 | A | 16-09-2009 | NONE | | |
| DE 10003832 | A1 | 02-08-2001 | NONE | | |
| US 5445443 | A | 29-08-1995 | DE | 4244112 A1 | 30-06-1994 |
| | | | EP | 0603612 A1 | 29-06-1994 |
| | | | JP | 2584587 B2 | 26-02-1997 |
| | | | JP | 7002077 A | 06-01-1995 |
| US 2009282915 | A1 | 19-11-2009 | DE | 102009020838 A1 | 19-11-2009 |
| | | | JP | 2010181392 A | 19-08-2010 |
| US 2009194860 | A1 | 06-08-2009 | DE | 102006022807 A1 | 22-11-2007 |
| | | | EP | 2019810 A1 | 04-02-2009 |
| | | | WO | 2007131823 A1 | 22-11-2007 |
| | | | JP | 2009537802 T | 29-10-2009 |
| DE 10039978 | A1 | 17-05-2001 | NONE | | |

EPO FORM P0459

For more details about this annex : see Official Journal of the European Patent Office, No. 12/82